# EUROPÄISCHE PATENTANMELDUNG

(11) **EP 4 144 502 A1**
(43) Veröffentlichungstag der Anmeldung: **08.03.2023**
(21) Anmeldenummer: 22194223.8
(22) Anmeldetag: 06.09.2022
(51) Int. Cl.: B29C 45/16, A46D 3/00, B29C 45/26, B29C 45/04, B29C 45/14

(54) **VORRICHTUNG ZUM VERBINDEN VON STRANGFÖRMIGEN PROFILABSCHNITTEN SOWIE VERFAHREN ZUM VERBINDEN VON STRANGFÖRMIGEN PROFILABSCHNITTEN**

(30) Priorität: 07.09.2021 DE 102021123160
(71) Anmelder: STG Stanztechnik GmbH & Co.KG, 84032 Altdorf (DE)
(72) Erfinder: STEINL, Peter, 84036 Landshut (DE)
(74) Vertreter: Flügel Preissner Schober Seidel

(57) **Zusammenfassung**

Die Erfindung betrifft eine Vorrichtung (10) zum stoffschlüssigen Verbinden von strangförmigen Profilabschnitten (12), um ein geschlossenes Profilelement zu erzeugen, aufweisend einen Werkzeugtisch (14) mit wenigstens einer Formaufspannplatte (22) zur Aufnahme von Formgebungswerkzeugen (24), in die jeweils Endabschnitte zweier strangförmiger Profilabschnitte (12) zueinander beabstandet einlegbar sind, eine Spritzgießvorrichtung (18) zum Einspritzen einer spritzfähigen Formmasse in die Formgebungswerkzeuge (24), um die Endabschnitte stoffschlüssig miteinander zu verbinden und eine Schließeinheit (16) zum Aufbringen einer Schließkraft auf die Formgebungswerkzeuge (24) während des Einspritzens der Formmasse, wobei die Spritzgießvorrichtung (18) für jede Verbindung wenigstens eine Einspritzeinheit (38) aufweist. Ferner betrifft die Erfindung ein Verfahren zum Verbinden von strangförmigen Profilabschnitten (12).

## Beschreibung

Die vorliegende Erfindung betrifft eine Vorrichtung zum Verbinden von strangförmigen Profilabschnitten, um ein geschlossenes Profilelement zu erzeugen. Des Weiteren betrifft die Erfindung ein Verfahren zum Verbinden von strangförmigen Profilabschnitten.

Im Fahrzeugbau werden Dichtungsprofile zur Abdichtung einer mit einer bewegbaren Fensterscheibe versehenen Fensteröffnung eingesetzt. Hierzu wird das Dichtungsprofil an der Fensteröffnung des Fahrzeugs befestigt, so dass die bewegliche Fensterscheibe an dem Dichtungsprofil anliegt. Die Abdichtung des Innenraums des Fahrzeugs gegenüber der Fahrzeugumgebung, insbesondere gegen Schall, Wärme/Kälte und Feuchtigkeit, in einer Schließstellung der Scheibe, ist hierbei von großer Bedeutung. Derartige Dichtungsprofile bestehen zumeist aus mehreren strangförmigen Profilabschnitten, die stoffschlüssig miteinander zu einem geschlossenen, die Fensteröffnung umlaufenden Dichtungsprofil verbunden werden.

Aus EP 0 578 797 B1 geht eine Vorrichtung und ein Verfahren zur Herstellung der Ecken von Dichtungsrahmen, die zumeist aus vier zusammengesetzten strangförmigen Dichtungsprofilen aus elastomeren Werkstoff bestehen, hervor. Die Vorrichtung weist eine Innenform, eine Außenform und wenigstens eine in der Außenform angeordnete Injektionsöffnung, die innerhalb der Ecke der Außenform in einen Formenspalt mündet. Zur Herstellung der Ecken werden zwei strangförmige Dichtungsprofile in die Innenform eingelegt und anschließend wird die Außenform aufgebracht. In den verbleibenden Formenspalt wird über die Injektionsöffnung der elastomere Werkstoff eingebracht und mittels beheizbarer Formpressen wird die Rahmenecke vulkanisiert und anschließend entformt.

Nachteilig hierbei ist, dass die einzelnen Ecken beziehungsweise Verbindungsstellen jeweils einzeln auf der Vorrichtung hergestellt werden müssen. Dies erfordert jedoch einen hohen logistischen und zeitlichen Aufwand, da die halbfertigen Dichtungsrahmen gepuffert werden müssen, von einer Maschine zur nächsten transportiert werden, bis die letzte Verbindungsstelle an der letzten Maschine hergestellt wird. Die Synchronisierung der Werktätigkeit ist schwierig, so dass oft viel Totzeit übrig bleibt, in der der Werker nicht produktiv ist.

Der vorliegenden Erfindung liegt die Aufgabe zugrunde, eine Vorrichtung und ein Verfahren zu schaffen, die eine Verkürzung der Prozesszeiten bei gleichzeitiger Erhöhung der Produktqualität ermöglichen.

Zur Lösung der Aufgabe wird eine Vorrichtung mit den Merkmalen des Anspruchs 1 und ein Verfahren mit den Merkmalen des Anspruchs 11 vorgeschlagen.

Vorteilhafte Ausgestaltungen der Vorrichtung sind Gegenstand der abhängigen Ansprüche.

Eine Vorrichtung zum Verbinden von strangförmigen Profilabschnitten, um ein geschlossenes Profilelement zu erzeugen, weist einen Werkzeugtisch mit wenigstens einer Formaufspannplatte zur Aufnahme von Formgebungswerkzeugen, in die jeweils Endabschnitte zweier strangförmiger Profilabschnitte zueinander beabstandet einlegbar sind, eine Spritzgießvorrichtung zum Einspritzen einer spritzfähigen Formmasse in die Formgebungswerkzeuge, um die die Endabschnitte stoffschlüssig miteinander zu verbinden, und eine Schließeinheit zum Aufbringen einer Schließkraft auf die Formgebungswerkzeuge während des Einspritzens der Formmasse auf, wobei die Spritzgießvorrichtung für jede Verbindung wenigstens eine Einspritzeinheit aufweist.

Die Vorrichtung ermöglicht die Fertigung eines geschlossenen Profilelements in einem Arbeitsschritt. Dadurch können die Prozesszeiten verkürzt sowie mögliche Toleranzen bei der Herstellung des geschlossenen Profilelements minimiert werden, was eine gesteigerte Qualität der Produkte zur Folge hat. Bei der Vorrichtung werden alle Profilabschnitte gemeinsam in den Formgebungswerkzeugen positioniert und gemeinsam durch gleichzeitiges Einspritzen der Formmasse in die Formgebungswerkzeuge verbunden. Dadurch ist kein Handling und Wiedereinlegen der Profilabschnitte notwendig. Darüber hinaus ist ein versetztes Einspritzen möglich, um bei unterschiedlichen Volumina, welche unterschiedliche Heizzeiten erfordern, ein gleichzeitiges Heizzeitende zu erreichen.

Die strangförmigen Profilabschnitte können beispielsweise extrudierte Dichtungsprofilabschnitte aus einem elastomeren Werkstoff sein. Das geschlossene Profilelement kann ein geschlossenes Dichtungsprofil für ein Fahrzeug sein. Das geschlossene Dichtungsprofil kann ein Fenster-, Fensterführungs-, Tür-, Frontklappen- oder Heckklappendichtungsprofil sein.

Die spritzfähige Formmasse kann Kunststoff sein. Der Kunststoff kann ein Thermoplast, Duroplast oder Elastomer sein. Wenn als spritzfähige Formmasse ein Elastomer eingespritzt wird, dann ist es erforderlich, die Formmasse aufzuheizen, damit diese durch Vernetzung in einen festen Zustand übergeht. Dieser Vorgang wird als Vulkanisationsprozess bezeichnet. Wenn die spritzfähige Formmasse ein Thermoplast, insbesondere ein thermoplastisches Elastomer ist, dann muss die eingespritzte Formmasse gekühlt werden, damit die Formmasse in einen festen Zustand übergeht.

Die Verbindung kann vorliegend auch als Verbindungstelle bezeichnet werden. Wenn die Profilabschnitte aus einem elastomeren Werkstoff sind, dann sind die Verbindungen vorteilhaft ebenfalls aus einem elastomeren Werkstoff.

Bei der Vorrichtung wird für jede Verbindung wenigstens ein Formgebungswerkzeug auf der Formaufspannplatte angeordnet, insbesondere montiert. Das heißt, wenn zur Herstellung eines geschlossenen Profilelements vier Profilabschnitte erforderlich sind, so müssen diese über vier Verbindungen miteinander verbunden werden, so dass vier Formgebungswerkzeuge auf der Formaufspannplatte montiert werden müssen. Wenn das geschlossene Profilelement aus drei Profilabschnitten besteht, sind diese über drei Verbindungen miteinander verbunden, so dass drei Formgebungswerkzeuge auf der Formaufspannplatte montiert werden müssen. Folglich müssen für n Verbindungen wenigstens n Formgebungswerkzeuge auf der Formaufspannplatte montiert werden.

Jedes Formwerkzeug kann zwei Formhälften aufweisen. Zur Herstellung einer Verbindung werden die Endabschnitte zweier Profilabschnitte zueinander beabstandet in eine Formhälfte des Formgebungswerkzeugs eingelegt, und anschließend wird die zweite Formhälfte des Formgebungswerkzeugs darauf positioniert. Dadurch wird zwischen den beabstandeten Endabschnitten ein Formenhohlraum geschaffen, in den die plastifizierte Formmasse eingespritzt wird, um die Verbindung herzustellen. Zum Einspritzen der plastifizierten Formmasse kann eine der Formhälften eine Einspritzöffnung aufweisen, die in dem Formenhohlraum mündet.

Um ein Aufdrücken des Formgebungswerkzeugs nach dem Öffnen der Schließeinheit zu verhindern, kann jedes Formgebungswerkzeug eine Verriegelungsvorrichtung aufweisen. Die Verriegelungsvorrichtung kann aus zueinander beabstandeten Klemmleisten gebildet sein, die mit Klemmschienen zusammenwirken. Vorteilhaft ist die Verriegelungsvorrichtung aus jeweils zwei zueinander beabstandeten Klemmleisten, die an gegenüberliegenden Seiten des Formgebungswerkzeugs angeordnet sind, gebildet. Vorteilhaft weisen die Klemmleisten und die dazu korrespondierenden Klemmschienen eine Schräge auf. Über die Schrägen und die sich daraus ergebende Keilwirkung kann eine Selbsthemmung erzeugt werden, so dass die horizontal eingeleitete Schließbewegung in eine vertikale Klemmbewegung mit wesentlich höherer Schließkraft übersetzt werden kann. Dadurch wird ein Aufdrücken des Formgebungswerkzeugs aufgrund des darin vorherrschenden Drucks nach dem Einspritzen der Formmasse effektiv verhindert. Vorteilhaft weisen die Klemmleisten und die korrespondierenden Klemmschienen im Querschnitt eine Keilform auf. Die Schrägen der Klemmleisten und/oder Klemmschienen können einen Winkel von <7° aufweisen.

Die Spritzgießvorrichtung plastifiziert vorzugsweise ein Granulat zu einer spritzfähigen Formmasse und spritzt die plastifizierte Formmasse unter Druck in den zwischen den beiden Endabschnitten gebildeten Formenhohlraum ein. Das Granulat kann ein thermoplastisches, duroplastisches oder elastomeres Granulat sein.

Die Einspritzeinheit ist Bestandteil der Spritzgießvorrichtung. Die Einspritzeinheit spritzt eine zuvor plastifizierte Formmasse unter Druck in das Formgebungswerkzeug ein. Die Einspritzeinheit kann einen Zylinder mit einer Düse und einem innerhalb des Zylinders beweglichen Kolben aufwiesen. Durch Bewegung des Kolbens wird die im Zylinder befindliche plastifizierte Formmasse über die Düse in den Formhohlraum des Formgebungswerkzeugs eingespritzt.

Nach dem Einspritzen ist es erforderlich, die Formmasse aufzuheizen oder zu kühlen, damit diese in einen festen Zustand übergeht. Wenn die Formmasse ausgehärtet ist, kann das Formgebungswerkzeug geöffnet und das erhärtete Formteil entnommen werden. Zum Aufheizen oder Kühlen der in das Formgebungswerkzeug eingespritzten Formmasse kann das Formgebungswerkzeug eine Heiz- und/oder Kühlvorrichtung aufweisen, die die eingespritzte Formmasse erwärmt und/oder kühlt. Alternativ können die Formgebungswerkzeuge einer außerhalb der Vorrichtung angeordneten Heiz- oder Kühlvorrichtung zugeführt werden. Hierzu kann eine Greifvorrichtung, wie beispielswiese ein Manipulator in Form eines Roboterarms eingesetzt werden, der die Formgebungswerkzeuge einer Heiz- oder Kühlvorrichtung zuführt.

Die Schließeinheit bringt während des Einspritzens der Formmasse eine Schließkraft auf die Formgebungswerkzeuge auf, um ein Aufdrücken der Formgebungswerkzeuge während des Einspritzvorgangs zu verhindern. In einer vorteilhaften Ausgestaltung beheizt die Schließeinheit die Formgebungswerkzeuge während des Einspritzens.

In einer vorteilhaften Ausgestaltung ist der Werkzeugtisch als ein Drehtisch oder ein Schiebetisch ausgebildet, wobei durch Drehen des Drehtisches oder durch horizontales Verfahren des Schiebetisches die wenigstens eine Formaufspannplatte von einer Bestückungs- und/oder Entnahmeposition in eine Produktionsposition und umgekehrt überführbar ist.

Dadurch wird der technische Vorteil erreicht, dass die Formgebungswerkzeuge außerhalb der Spritzgießvorrichtung auf der Formaufspannplatte montiert und mit den strangförmigen Profilabschnitten bestückt und in die Produktionsposition zum Einspritzen der plastifizierten Formmasse überführt werden können. Nach dem Einspritzen der Formmasse kann zur Entnahme des geschlossenen Dichtungsprofils aus den Formgebungswerkzeugen die Formaufspannplatte wieder in die Entnahme- und /oder Bestückungsposition überführt werden. Vorliegend ist die Bestückungs- und Entnahmeposition dieselbe. Die Produktionsposition ist vorliegend diejenige Position, in welcher die Formaufspannplatte samt Formgebungswerkzeugen und eingelegter Profilabschnitte sich innerhalb der Schließeinheit und der Spritzgießvorrichtung befinden. Demgemäß wird bei einem Herstellvorgang der Werkzeugtisch, insbesondere die Formaufspannplatte in der Bestückungs- und/oder Entnahmeposition mit Formgebungswerkzeugen und Profilabschnitten bestückt. Hierzu kann eine Greifvorrichtung, wie beispielswiese ein Manipulator in Form eines Roboterarms eingesetzt werden, der die Formgebungswerkzeuge auf der Formaufspannplatte anordnet und/oder die Formgebungswerkzeuge mit Profilabschnitten bestückt. Anschließend wird der Drehtisch gedreht, insbesondere um 180° gedreht, oder der Schiebetisch wird horizontal verfahren, um die Formgebungswerkzeuge samt eingelegter Profilabschnitte in die Produktionsposition zu überführen. Danach bringt die Schließeinheit eine Kraft auf die Formgebungswerkzeuge auf und die Spritzgießvorrichtung spritzt die plastifizierte Formmasse in die Formgebungswerkzeuge ein. Anschließend wird der Werkzeugtisch gedreht, insbesondere um 180° gedreht, oder horizontal verfahren, um die Formgebungswerkzeuge wieder in die Bestückungs- und/oder Entnahmeposition zu überführen, in welcher entweder die Formgebungswerkzeuge mittels der Greifvorrichtung einer Heizvorrichtung zugeführt werden können, oder in welcher die Formgebungswerkzeuge geöffnet werden können und das fertige, geschlossene Profilelement aus den Formgebungswerkzeugen entnommen werden kann.

Vor der Entnahme des Dichtungsprofils aus den Formgebungswerkzeugen können die Qualität der Verbindungen geprüft werden. Hierzu können die Verbindungen optisch, beispielsweise mittels einer Kamera und/oder einem 3D-Scanner geprüft werden. Daraus kann ein Auswerteprotokoll erstellt werden, das beispielsweise Informationen zu dem Dichtungsprofil, wie beispielsweise dessen Produktionsdatum und/oder eingesetzte Materialien, dem Produktionsprozess, wie beispielsweise Einspritzmenge, Heiz- und/oder Kühlzeit, sowie die Qualität der Verbindungen umfasst. Das Auswerteprotokoll kann zu Dokumentationszwecken in einer Datenbank, auf einem Computer, in einer Cloud und/oder einem Speichermedium abgespeichert werden. Somit kann die Qualität des hergestellten Dichtungsprofils dokumentiert werden. Dies kann gegenüber dem Kunden als Nachweis dienen. Nach der Prüfung kann das geschlossene Dichtungsprofil mit einem Barcode, einem QR-Code und/oder einem mit einem Auswerteprotokoll versehenen Speichermedium versehen werden. Der Barcode oder der QR-Code kann auf ein in einer Cloud hinterlegtes Auswerteprotokoll referenzieren. Durch Auslesen des Barcodes oder des QR-Codes kann unmittelbar auf das in einer Cloud hinterlegte, dem Dichtungsprofil zugehörige Auswerteprotokoll zugegriffen werden. Dadurch ist es möglich, das Dichtungsprofil dem gesamten Produktionsprozess zuzuordnen. Darüber hinaus kann der Barcode, der QR-Code oder das Speichermedium mittels eines Mobiltelefons ausgelesen werden. Das Speichermedium kann ein RFID-Chip sein.

In einer vorteilhaften Ausgestaltung ist durch Drehen des Drehtisches oder durch horizontales Verfahren des Schiebetisches die wenigstens eine Formaufspannplatte in eine Zwischenposition überführbar.

Dadurch wird der technische Vorteil erreicht, dass in der Zwischenposition die eingespritzte Formmasse durch Heizen und/oder Kühlen ausgehärtet werden kann und/oder dass die Qualität der Verbindungen geprüft, insbesondere optisch geprüft, werden kann. Hierzu können die Verbindungen optisch, beispielsweise mittels einer Kamera und/oder einem 3D-Scanner geprüft werden. Daraus kann ein Auswerteprotokoll erstellt werden, das beispielsweise Informationen zu dem Dichtungsprofil, wie beispielsweise dessen Produktionsdatum und/oder eingesetzte Materialien, dem Produktionsprozess, wie beispielsweise Einspritzmenge, Heiz- und/oder Kühlzeit, sowie die Qualität der Verbindungen umfasst. Das Auswerteprotokoll kann zu Dokumentationszwecken in einer Datenbank, auf einem Computer, in einer Cloud und/oder einem Speichermedium abgespeichert werden. Somit kann die Qualität des hergestellten Dichtungsprofils dokumentiert werden. Dies kann gegenüber dem Kunden als Nachweis dienen. Nach der Prüfung kann das geschlossene Dichtungsprofil mit einem Barcode, einem QR-Code und/oder ein mit Auswerteprotokoll versehenes Speichermedium versehen werden. Der Barcode oder der QR-Code kann auf ein in einer Cloud hinterlegtes Auswerteprotokoll referenzieren. Durch Auslesen des Barcodes oder QR-Codes kann unmittelbar auf das in einer Cloud hinterlegte, dem Dichtungsprofil zugehörige Auswerteprotokoll zugegriffen werden. Dadurch ist es möglich, das Dichtungsprofil dem gesamten Produktionsprozess zuzuordnen. Darüber hinaus kann der Barcode, der QR-Code oder das Speichermedium mittels eines Mobiltelefons ausgelesen werden. Das Speichermedium kann ein RFID-Chip sein. Wenn der Drehtisch oder der Schiebetisch eine Zwischenposition umfasst, so kann jeweils durch Drehen des Drehtisches um 120° oder durch horizontales Verfahren des Schiebetisches die Produktions-, Zwischen- und Bestückungs- und Entnahmeposition überführt werden. Vorteilhaft ist die Zwischenposition nach der Produktionsposition. Die Zwischenposition kann vorliegend auch als Prüfposition bezeichnet werden.

In einer vorteilhaften Ausgestaltung weist der Drehtisch wenigstens eine weitere Formaufspannplatte zur Aufnahme von Formgebungswerkzeugen auf, wobei die beiden Formaufspannplatten einander gegenüberliegend auf dem Drehtisch angeordnet sind, so dass die eine Formaufspannplatte in der Bestückungs- und/oder Entnahmeposition angeordnet ist und die andere Formaufspannplatte in der Produktionsposition angeordnet ist.

Dadurch wird der technische Vorteil erreicht, dass die Prozesszeiten verkürzt werden können, da sich ein Satz von Formgebungswerkzeugen in der Produktionsposition befindet, und parallel dazu kann der Werkzeugtisch mit einem zweiten Satz an Formgebungswerkzeugen und Profilabschnitten bestückt werden.

In einer vorteilhaften Ausgestaltung weist der Drehtisch drei Formaufspannplatten zur Aufnahme von Formgebungswerkzeugen auf, wobei die Formaufspannplatten gleichmäßig am Umfang des Drehtisches angeordnet sind, wobei eine Formaufspannplatte in der Bestückungs- und/oder Entnahmeposition angeordnet ist, eine Formaufspannplatte in der Produktionsposition angeordnet ist und eine Formaufspannplatte in der Zwischenposition angeordnet ist.

Dadurch wird der technische Vorteil erreicht, dass die Prozesszeiten verkürzt werden können, da sich ein Satz von Formgebungswerkzeugen in der Produktionsposition befindet, ein Satz von Formgebungswerkzeugen befindet sich in der Zwischenposition und parallel dazu kann der Werkzeugtisch mit einem zweiten Satz an Formgebungswerkzeugen und Profilabschnitten bestückt werden. In der Zwischenposition kann beispielswiese die in die Formgebungswerkzeuge eingespritzte Formmasse zur Vernetzung beheizt werden. Hierzu kann jedes Formgebungswerkzeug mit einer Heizvorrichtung ausgestattet sein.

In einer vorteilhaften Ausgestaltung ist die wenigstens eine Formaufspannplatte relativ zu dem Werkzeugtisch bewegbar.

Dadurch wird der technische Vorteil erreicht, dass die Schließeinheit zum Einspritzen lediglich die Formaufspannplatte aus dem Werkzeugtisch heben muss. Dadurch kann die Schließeinheit kleiner dimensioniert werden.

In einer vorteilhaften Ausgestaltung ist die Schließeinheit als eine 3-Säulenpresse, eine 4-Säulenpresse oder eine Rahmenpresse ausgebildet.

Dadurch wird der technische Vorteil erreicht, dass die Vorrichtung ein geringes Aufstellmaß hat und damit einen geringen Platzbedarf erfordert. Die 3-Säulenpresse weist drei Säulen und die Schließeinheit auf, wobei die Schließeinheit mit den Säulen verbunden ist. Die 4-Säulenpresse weist 4 Säulen und die Schließeinheit auf, wobei die Schließeinheit mit den Säulen verbunden ist.

Wenn die Schließeinheit eine 4-Säulenpresse oder eine Rahmenpresse ist, dann ist der Werkzeugtisch vorteilhaft ein Schiebetisch.

In einer vorteilhaften Ausgestaltung dreht sich der Drehtisch um eine Säule der 3-Säulenpresse.

Dadurch wird der technische Vorteil erreicht, dass die Vorrichtung eine kompakte Bauform aufweist. Vorteilhaft dient eine Säule der 3-Säulenpresse als Drehachse für den Drehtisch. Diese Säule ist eine zentrale Säule, um die sich der Drehtisch anordnet. Die anderen beiden Säulen sind außerhalb des Drehtisches angeordnet.

In einer vorteilhaften Ausgestaltung weist die Schließeinheit zwei zueinander beabstandete, feststehende Schließplatten und eine entlang der Säulen bewegbare Schließplatte, die zwischen den feststehenden Schließplatten angeordnet ist, auf, wobei zwischen einer feststehenden Schließplatte und der bewegbaren Schließplatte ein Krafterzeugungsmittel zum Bewegen der bewegbaren Schließplatte und zum Erzeugen der zum Einspritzen erforderlichen Schließkraft angeordnet ist.

Dadurch wird der technische Vorteil erreicht, dass die Schließeinheit ein Aufdrücken der Formgebungswerkzeuge während des Einspritzens verhindert. Hierzu drückt die bewegbare Schließplatte die Formgebungswerkzeuge gegen eine feststehende, insbesondere darüberliegende Schließplatte, wobei die hierfür erforderliche Kraft durch das Krafterzeugungsmittel aufgebracht wird. Das Krafterzeugungsmittel kann ein Hydraulikzylinder sein, der auf einer der feststehenden Schließplatten angeordnet ist und gegen die bewegbare Schließplatte drückt, wodurch selbige gegen die andere feststehende Schließplatte gedrückt wird. Vorliegend kann die Schließplatte, gegen die die Formgebungswerkzeuge gedrückt werden, auch als obere Schließplatte und die andere Schließplatte kann als untere Schließplatte bezeichnet werden.

In einer vorteilhaften Ausgestaltung ist in der Produktionsposition die Formaufspannplatte auf der bewegbaren Schließplatte angeordnet.

Dadurch wird der technische Vorteil erreicht, dass das Krafterzeugungsmittel kleiner dimensioniert werden kann, da nicht der gesamte Werkzeugtisch gegen die feststehende Schließplatte gedrückt werden muss, sondern nur die Formaufspannplatte samt den darauf befindlichen Formgebungswerkzeugen. Somit wird die in der Produktionsposition befindliche Formaufspannplatte von dem Schließsystem, insbesondere der bewegbaren Platte, aus dem Drehtisch oder dem Schiebetisch ausgehoben und gegen eine feststehende, insbesondere darüberliegende Schließplatte gepresst. Nach dem Einspritzen wird die bewegbare Schließplatte samt der darauf befindlichen Formaufspannplatte und Formgebungswerkzeuge wieder über die bewegbare Schließplatte nach unten gefahren, so dass die Formaufspannplatte wieder auf dem Drehtisch oder dem Schiebtisch aufliegt.

In einer vorteilhaften Ausgestaltung sind die Einspritzeinheiten auf einer der feststehenden Schließplatten angeordnet.

Dadurch wird der technische Vorteil erreicht, dass eine beliebige Anzahl an Einspritzeinheiten vorgesehen werden kann. Vorteilhaft befinden sich die Einspritzeinheiten auf der über der bewegbaren Schließplatte angeordneten feststehenden Schließplatte. In diese feststehende Schließplatte kann für jede Einspritzeinheit ein Einfüllkanal eingebracht sein, welcher beim Andrücken der Formgebungswerkzeuge gegen die feststehende Schließplatte mit einer Einspritzöffnung eines der Formgebungswerkzeuge fluchtet. Vorteilhaft weist jede Einspritzeinheit eine Düse auf, über die die plastifizierte Formmasse unter Druck in den Einfüllkanal eingespritzt wird.

In einer vorteilhaften Ausgestaltung ist jeder Einspritzeinheit eine Plastifiziereinheit zugeordnet.

Dadurch wird der technische Vorteil erreicht, dass zum Einspritzen der Formmasse ausreichend Material zur Verfügung steht. Die Plastifiziereinheit kann eine(n) innerhalb eines Zylinders angeordnete(n) Schnecke oder Extruder, eine Schneckenantriebsvorrichtung, einen Trichter zum Einfüllen der zu verarbeitenden Formmasse, eine Heizeinrichtung zum Plastifizieren der eingefüllten Formmasse und eine Düse zum Befüllen der Einspritzeinheit mit der plastifizierten Formmasse aufweisen.

Gemäß einem weiteren Aspekt wird ein Verfahren zum Verbinden von strangförmigen Profilabschnitten zu einem geschlossenen Profilelement mittels einer erfindungsgemäßen Vorrichtung vorgeschlagen. Zuerst wird ein Werkzeugtisch, insbesondere ein Drehtisch oder Schiebtisch, mit Formgebungswerkzeugen bestückt. Anschließend werden Endabschnitte zweier Profilabschnitte in jeweils ein Formgebungswerkzeug eingelegt. Danach wird eine Schließkraft auf die Formgebungswerkzeuge mittels einer Schließeinheit aufgebracht. Dann wird eine plastifizierte Formmasse mittels einer Spritzgießvorrichtung in die Formgebungswerkzeuge eingespritzt, um die Endabschnitte der Profilabschnitte stoffschlüssig miteinander zu verbinden. Im Anschluss daran wir das geschlossene Profilelement aus den Formgebungswerkzeugen entnommen.

Vorteilhaft wird der Werkzeugtisch, insbesondere der Drehtisch oder der Schiebetisch in einer Bestückungs- und/oder Entnahmeposition mit den Formgebungswerkzeugen bestückt und die Profilabschnitte werden eingelegt. Weiterhin vorteilhaft wird eine auf dem Werkzeugtisch angeordnete Formaufspannplatte mit den Formgebungswerkzeugen bestückt. Anschließend kann der Drehtisch gedreht oder der Schiebetisch horizontal verschoben werden, so dass sich die Formgebungswerkzeuge in einer Produktionsposition befinden. In der Produktionsposition bringt eine Schließeinheit eine Schließkraft auf die Formgebungswerkzeuge auf. Hierzu kann eine bewegbare Schließplatte die Formaufspannplatte samt darauf angeordneten Formgebungswerkzeugen aus dem Werkzeugtisch, insbesondere aus dem Drehtisch oder dem Schiebetisch heben und gegen eine darüberliegende feststehende Schließplatte drücken. Die Spritzgießvorrichtung kann pro Verbindung eine Einspritzeinheit aufweisen. Jede Einspritzeinheit spritzt eine plastifizierte Formmasse in ein Formgebungswerkzeug, um die darin befindlichen Endabschnitte stoffschlüssig zu verbinden. Weiterhin vorteilhaft beginnt nach dem Einspritzen die Heiz und/oder Abkühlzeit. Hierzu können die Formgebungswerkzeuge beheizt werden, um die darin eingespritzte Formmasse aufzuheizen. Nach dem Einspritzen kann die Schließeinheit die Formaufspannplatte auf dem Werkzeugtisch, insbesondere dem Drehtisch oder Schiebetisch wieder ablegen. Zur Entnahme des geschlossenen Profilelementes kann der Werkzeugtisch, insbesondere der Drehtisch oder Schiebetisch wieder in die Bestückungs- und/oder Entnahmeposition überführt werden.

Ein alternatives Verfahren zum Verbinden von strangförmigen Profilabschnitten zu einem geschlossenen Profilelement mittels einer erfindungsgemäßen Vorrichtung kann folgende Verfahrensschritte aufweisen. Zunächst werden in der Bestückungs- und/oder Entnahmeposition untere Formhälften auf der Formaufspannplatte montiert und jeweils ein Endabschnitt zweier strangförmiger Profilabschnitte werden zueinander beabstandet in jeweils eine untere Formhälfte eingelegt. Anschließend werden obere Formhälften auf die unteren Formhälften aufgelegt, so dass zwischen den beabstandeten Endabschnitten Formenhohlräume entstehen. Anschließend wird der Drehtisch um 180° gedreht, oder der Schiebetisch wird horizontal verschoben, so dass sich die Formgebungswerkzeuge und die darin eingelegten strangförmigen Profilabschnitte in der Produktionsposition befinden. In der Produktionsposition hebt die bewegbare Schließplatte die Formaufspannplatte samt darauf befindlichen Formgebungswerkzeugen aus dem Drehtisch oder dem Schiebetisch, indem das nicht dargestellte Krafterzeugungsmittel eine Kraft auf die bewegbare Schließplatte ausübt. Das Krafterzeugungsmittel drückt die bewegbare Schließplatte, insbesondere die Formgebungswerkzeuge gegen die obere feststehende Schließplatte, um ein Aufdrücken der Formgebungswerkzeuge während des Einspritzens der plastifizierten Formmasse zu verhindern. Anschließend spritzen die Einspritzeinheiten die plastifizierte Formmasse in die Formgebungswerkzeuge ein. Nach dem Einspritzen werden die Formgebungswerkzeuge mittels der nicht dargestellten Verriegelungsvorrichtung verriegelt und die eingespritzte Formmasse wird mittels der in die Formgebungswerkzeuge integrierten Heizvorrichtung aufgeheizt, so dass diese durch Vernetzung in einen festen Zustand übergeht. Danach bewegt sich die bewegbare Schließplatte samt Formaufspannplatte und Formgebungswerkzeuge nach unten und legt selbige auf dem Drehtisch oder Schiebetisch ab. Danach wird der Drehtisch um 180° gedreht oder der Schiebetisch wird horizontal verschoben, so dass sich das nunmehr erzeugte geschlossene Profilelement in der Bestückungs- und/oder Entnahmeposition befindet. Wenn die eingespritzte Formmasse vollständig ausgehärtet ist, können die Formgebungswerkzeuge entriegelt und geöffnet werden und das geschlossene Profilelement kann entnommen werden.

Nachfolgend werden eine Vorrichtung, ein Verfahren sowie weitere Merkmale und Vorteile anhand eines Ausführungsbeispiels näher erläutert, das in den Figuren schematisch dargestellt ist. Hierbei zeigt:
- Fig. 1: eine perspektivische Darstellung der Vorrichtung; und
- Fig. 2: eine Draufsicht auf die Vorrichtung mit in die Formgebungswerkzeu-ge eingelegten Profilabschnitten.

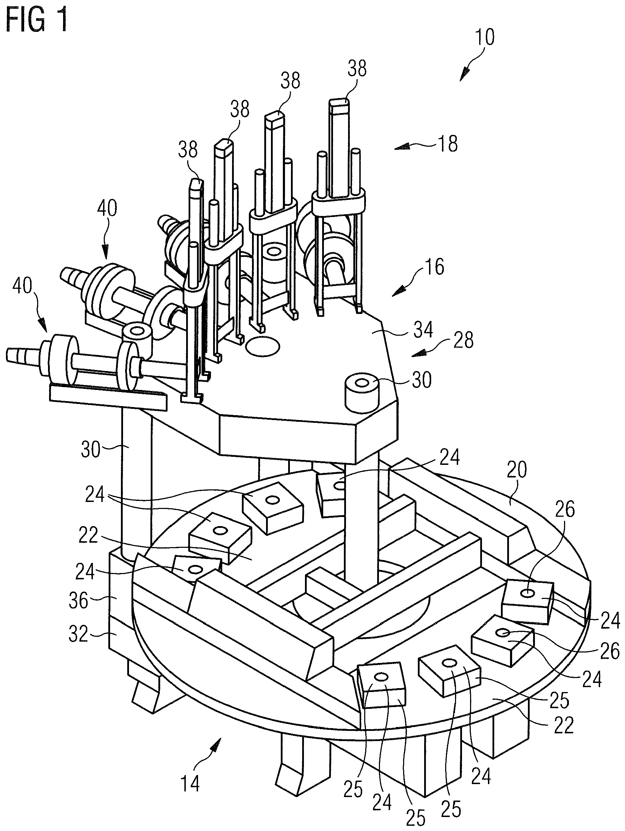

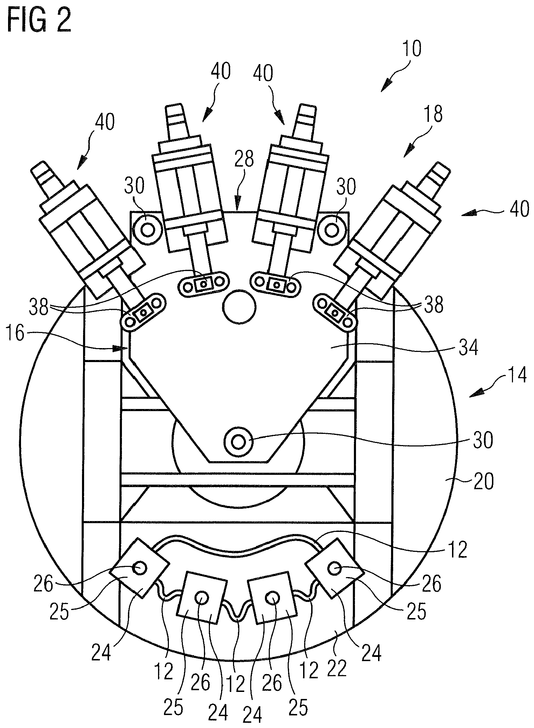

In den Figuren 1 und 2 ist eine Vorrichtung 10 zum Verbinden von strangförmigen Profilabschnitten 12 zu einem geschlossenen Profilelement gezeigt. Die strangförmigen Profilabschnitte 12 können extrudierte, elastomere Dichtungsprofilabschnitte sein, die mittels der Vorrichtung zu einem geschlossenen Dichtungsprofil verbunden werden.

Die Vorrichtung 10 weist einen Werkzeugtisch 14, eine Schließeinheit 16 und eine Spritzgießvorrichtung 18 auf.

Der Werkzeugtisch 14 ist als ein Drehtisch 20 ausgebildet und weist zwei einander gegenüberliegende Formaufspannplatten 22 auf, auf denen Formgebungswerkzeuge 24 anordenbar beziehungsweise montierbar sind. Die Formaufspannplatten 22 sind mit dem Drehtisch 20 nicht fest verbunden und können aus dem Drehtisch 20 gehoben werden.

Jedes der Formgebungswerkzeuge 24 weist zwei Formhälften 25 auf, zwischen denen Endabschnitte zweier strangförmiger Profilabschnitte 12 zueinander beabstandet einlegbar sind. Im geschlossenen Zustand des Formgebungswerkzeuges wird dadurch zwischen den beabstandeten Endabschnitten ein Formenhohlraum geschaffen, der mit einer plastifizierten Formmasse ausgefüllt werden kann, um die beiden Endabschnitte miteinander zu verbinden. Wie in Fig. 2 ersichtlich ist, weist die obere Formhälfte 25 eine Einfüllöffnung 26 auf, über die die plastifizierte Formmasse in den Formenhohlraum eingespritzt werden kann. Ferner kann jedes Formgebungswerkzeug eine nicht dargestellte Verriegelungsvorrichtung, welche ein Aufdrücken des Formgebungswerkzeuges nach dem Einspritzen der plastifizierten Formmasse verhindert, und eine nicht dargestellte Heizvorrichtung aufweisen, die die eingespritzte Formmasse aufheizt, so dass diese durch Vernetzung in einen festen Zustand übergeht.

Die Schließeinheit 16 ist als eine 3-Säulenpresse 28 ausgebildet und weist drei Säulen 30, eine untere feststehende Schließplatte 32, eine obere feststehende Schließplatte 34, eine entlang den Säulen 30 bewegbare Schließplatte 36, die zwischen den beiden feststehenden Schließplatten 32, 34 angeordnet ist, und ein nicht dargestelltes Krafterzeugungsmittel, welches die bewegbare Schließplatte 36 bewegt, auf. Wie in den Figuren ersichtlich ist, ist der Drehtisch 20 um eine der Säulen 30 herum angeordnet, und die anderen beiden Säulen 30 sind außerhalb des Drehtisches positioniert.

Das nicht dargestellte Krafterzeugungsmittel bewegt die bewegbare Schließplatte 36 entlang der Säulen 30, wobei die bewegbare Schließplatte 36 die Formaufspannplatte 22 aus dem Drehtisch 20 hebt, und die Formgebungswerkzeuge 24 gegen die obere feststehende Schließplatte 34 drückt. Das Krafterzeugungsmittel kann ein Hydraulikzylinder sein, der sich auf der unteren feststehenden Schließplatte 32 abstützt und gegen die bewegbare Schließplatte 36 drückt.

Auf jeder Formaufspannplatte 22 befindet sich ein Satz an Formgebungswerkzeugen 24, wobei durch Drehen des Drehtisches 20 die Formaufspannplatten 22 samt darauf befindlichen Formgebungswerkzeugen 24 in unterschiedliche Positionen überführt werden können. Die Position, in welcher sich die Formaufspannplatte 22 außerhalb der Schließeinheit 16 und der Spritzgießvorrichtung 18 befindet, wird als Bestückungs- und/oder Entnahmeposition bezeichnet. In dieser Position können Formgebungswerkzeuge 24 auf der Formaufspannplatte 22 montiert, die Endabschnitte der strangförmigen Profilabschnitte 12 in die Formgebungswerkzeuge 24 eingelegt sowie das fertige Profilelement kann nach dem Einspritzen und Aushärten der plastifizierten Formmasse wieder entnommen werden. Die Position, in der sich die Formaufspannplatte 22 samt Formgebungswerkzeug 24 in der Schließeinheit 16 und der Spritzgießvorrichtung 18 befindet, wird auch als Produktionsposition bezeichnet. In dieser Position hebt die Schließeinheit 16, insbesondere die bewegbare Schließplatte 36 die Formaufspannplatte 22 samt darauf befindlichen Formgebungswerkzeugen 24 aus dem Drehtisch 20 und drückt die Formgebungswerkzeuge gegen die obere feststehende Schließplatte 34 und die Spritzgießvorichtung 18 spritzt eine plastifizierte Formmasse in den Formenhohlraum. Nach dem Einspritzen fährt die bewegbare Schließplatte 36 samt Formaufspannplatte 22 und Formgebungswerkzeuge 24 wieder nach unten und legt die Formaufspannplatte 22 auf dem Drehtisch 20 ab.

Die Spritzgießvorrichtung 18 weist pro Verbindungsstelle eine Einspritzeinheit 38 sowie pro Einspritzeinheit 38 eine Plastifiziereinheit 40 auf, wobei die Einspritzeinheiten 38 auf der oberen feststehenden Schließplatte 34 angeordnet sind.

Jede Plastifiziereinheit 40 kann eine(n) innerhalb eines Zylinders angeordnete Schnecke oder Extruder, eine Schneckenantriebsvorrichtung, einen Trichter zum Einfüllen der zu verarbeitenden Formmasse, eine Heizeinrichtung zum Plastifizieren der eingefüllten Formmasse und eine Düse zum Befüllen der Einspritzeinheit 38 mit der plastifizierten Formmasse aufweisen. Innerhalb der Plastifiziereinheit 40 wird eine spritzfähige Formmasse plastifiziert und anschließend in die Einspritzeinheit 38 eingefüllt.

Die Einspritzeinheit 38 spritzt die plastifizierte Formmasse in die gegen die obere feststehende Schließplatte 34 gedrückten Formgebungswerkzeuge 24 ein. Hierzu kann jede Einspritzeinheit 38 einen Zylinder mit einer Düse und einem innerhalb des Zylinders beweglichen Kolben aufweisen, wobei durch Bewegen des Kolbens die im Zylinder befindliche plastifizierte Formmasse über die Düse in das Formgebungswerkzeug 24 eingespritzt wird. Zum Einspritzen der plastifizierten Formmasse in die Formgebungswerkzeuge 24 sind in die obere feststehende Schließplatte 34 nicht dargestellte Einfüllkanäle eingebracht, welche einerseits mit den Düsen der Einspritzeinheiten 38 und den Einfüllöffnungen 26 der Formgebungswerkzeuge 24 fluchten.

Im Folgenden wird ein mögliches Verfahren zum Verbinden der strangförmigen Profilabschnitte 12 zu einem geschlossenen Profilelement beschrieben. Zunächst werden in der Bestückungs- und/oder Entnahmeposition untere Formhälften 25 auf der Formaufspannplatte 22 montiert und jeweils ein Endabschnitt zweier strangförmiger Profilabschnitte 12 werden zueinander beabstandet in jeweils eine untere Formhälfte 25 eingelegt. Anschließend werden obere Formhälften 25 auf die unteren Formhälften aufgelegt, so dass zwischen den beabstandeten Endabschnitten Formenhohlräume entstehen. Anschließend wird der Drehtisch 20 um 180° gedreht, so dass sich die Formgebungswerkzeuge 24 und die darin eingelegten strangförmigen Profilabschnitte 12 in der Produktionsposition befinden. In der Produktionsposition hebt die bewegbare Schließplatte 36 die Formaufspannplatte 22 samt darauf befindlichen Formgebungswerkzeugen 24 aus dem Drehtisch 20, indem das nicht dargestellte Krafterzeugungsmittel eine Kraft auf die bewegbare Schließplatte 36 ausübt. Das Krafterzeugungsmittel drückt die bewegbare Schließplatte 36, insbesondere die Formgebungswerkzeuge 24 gegen die obere feststehende Schließplatte 34, um ein Aufdrücken der Formgebungswerkzeuge 24 während des Einspritzens der plastifizierten Formmasse zu verhindern. Anschließend spritzen die Einspritzeinheiten 38 die plastifizierte Formmasse in die Formgebungswerkzeuge 24 ein. Nach dem Einspritzen werden die Formgebungswerkzeuge 24 mittels der nicht dargestellten Verriegelungsvorrichtung verriegelt und die eingespritzte Formmasse wird mittels der in die Formgebungswerkzeuge 24 integrierten Heizvorrichtung aufgeheizt, so dass diese durch Vernetzung in einen festen Zustand übergeht. Danach bewegt sich die bewegbare Schließplatte 36 samt Formaufspannplatte 22 und Formgebungswerkzeuge 24 nach unten und legt selbige auf dem Drehtisch 20 ab. Danach wird der Drehtisch 20 um 180° gedreht, so dass sich das nunmehr erzeugte geschlossene Profilelement in der Bestückungs- und/oder Entnahmeposition befindet. Wenn die eingespritzte Formmasse vollständig ausgehärtet ist, können die Formgebungswerkzeuge 24 entriegelt und geöffnet werden und das geschlossene Profilelement kann entnommen werden.

In einer nicht dargestellten Ausführungsform wird nach dem Einspritzen der Formmasse die Formaufspannplatte 22 in eine Zwischenposition überführt. In der Zwischenposition kann die eingespritzte Formmasse durch Heizen und/oder Kühlen ausgehärtet werden und/oder die Qualität der Verbindungen geprüft, insbesondere optisch geprüft werden. Hierzu können die Verbindungen optisch, beispielsweise mittels einer Kamera und/oder einem 3D-Scanner geprüft werden. Daraus kann ein Auswerteprotokoll erstellt werden, das beispielsweise Informationen zu dem Dichtungsprofil, wie beispielsweise dessen Produktionsdatum und/oder eingesetzte Materialien, dem Produktionsprozess, wie beispielsweise Einspritzmenge, Heiz- und/oder Kühlzeit, sowie die Qualität der Verbindungen umfasst. Das Auswerteprotokoll kann zu Dokumentationszwecken in einer Datenbank, auf einem Computer, in einer Cloud und/oder einem Speichermedium abgespeichert werden. Somit kann die Qualität des hergestellten Dichtungsprofils dokumentiert werden. Dies kann gegenüber dem Kunden als Nachweis dienen. Nach der Prüfung kann das geschlossene Dichtungsprofil mit einem Barcode, einem QR-Code und/oder einem mit einem Auswerteprotokoll versehenen Speichermedium versehen werden. Der Barcode oder der QR-Code kann auf ein in einer Cloud hinterlegtes Auswerteprotokoll referenzieren. Durch Auslesen des Barcodes oder QR-Codes kann unmittelbar auf das in einer Cloud hinterlegte, dem Dichtungsprofil zugehörige Auswerteprotokoll zugegriffen werden. Dadurch ist es möglich, das Dichtungsprofil dem gesamten Produktionsprozess zuzuordnen. Darüber hinaus kann der Barcode, der QR-Code oder das Speichermedium mittels eines Mobiltelefons ausgelesen werden. Das Speichermedium kann ein RFID-Chip sein.

In einer weiteren nicht dargestellten Ausführungsform ist der Werkzeugtisch 14 ein Schiebetisch. Durch horizontales Verschieben des Schiebtisches wird die Formaufspannplatte in die Produktions- Zwischen- und/oder Bestückungs- und/oder Entnahmeposition überführt. Wenn der Werkzeugtisch ein Schiebtisch ist, dann ist die Schließeinheit 16 entweder als eine 4-Säulenpresse oder eine Rahmenpresse ausgebildet.

Die Vorrichtung 10 zeichnet sich durch die Möglichkeit der Fertigung eines geschlossenen Profilelements in einem Arbeitsschritt aus. Dadurch können die Prozesszeiten verkürzt sowie mögliche Toleranzen bei der Herstellung des geschlossenen Profilelements minimiert werden, was eine gesteigerte Qualität der Produkte zur Folge hat. Bei der Vorrichtung 10 werden alle Profilabschnitte 12 gemeinsam in den Formgebungswerkzeugen 24 positioniert und gemeinsam durch gleichzeitiges Einspritzen der Formmasse in die Formgebungswerkzeuge 24 verbunden. Dadurch ist kein Handling und Wiedereinlegen der Profilabschnitte 12 notwendig.

### Bezugszeichenliste

- 10: Vorrichtung
- 12: strangförmiger Profilabschnitt
- 14: Werkzeugtisch
- 16: Schließeinheit
- 18: Spritzgießvorrichtung
- 20: Drehtisch
- 22: Formaufspannplatte
- 24: Formgebungswerkzeug
- 25: Formhälfte
- 26: Einfüllöffnung
- 28: 3-Säulenpresse
- 30: Säule
- 32: untere feststehende Schließplatte
- 34: obere feststehende Schließplatte
- 36: bewegbare Schließplatte
- 38: Einspritzeinheit
- 40: Plastifiziereinheit

## Patentansprüche

1. Vorrichtung (10) zum stoffschlüssigen Verbinden von strangförmigen Profilabschnitten (12), um ein geschlossenes Profilelement zu erzeugen, aufweisend einen Werkzeugtisch (14) mit wenigstens einer Formaufspannplatte (22) zur Aufnahme von Formgebungswerkzeugen (24), in die jeweils Endabschnitte zweier strangförmiger Profilabschnitte (12) zueinander beabstandet einlegbar sind, eine Spritzgießvorrichtung (18) zum Einspritzen einer spritzfähigen Formmasse in die Formgebungswerkzeuge (24), um die Endabschnitte stoffschlüssig miteinander zu verbinden, und eine Schließeinheit (16) zum Aufbringen einer Schließkraft auf die Formgebungswerkzeuge (24) während des Einspritzens der Formmasse, wobei die Spritzgießvorrichtung (18) für jede Verbindung wenigstens eine Einspritzeinheit (38) aufweist.

2. Vorrichtung (10) nach Anspruch 1, **dadurch gekennzeichnet, dass** der Werkzeugtisch (14) als ein Drehtisch (20) oder Schiebetisch ausgebildet ist, wobei durch Drehen des Drehtisches (20) oder horizontales Verfahren des Schiebetisches die wenigstens eine Formaufspannplatte (22) von einer Bestückungs- und/oder Entnahmeposition in eine Produktionsposition und umgekehrt überführbar ist.

3. Vorrichtung (10) nach Anspruch 2, **dadurch gekennzeichnet, dass** durch Drehen des Drehtisches (20) oder durch horizontales Verfahren des Schiebetisches die wenigstens eine Formaufspannplatte (22) in eine Zwischenposition überführbar ist.

4. Vorrichtung (10) nach Anspruch 2 oder 3, **dadurch gekennzeichnet, dass** der Drehtisch (20) wenigstens eine weitere Formaufspannplatte (22) zur Aufnahme von Formgebungswerkzeugen (24) aufweist, wobei die beiden Formaufspannplatten (22) einander gegenüberliegend auf dem Drehtisch (20) angeordnet sind, so dass die eine Formaufspannplatte (22) in der Bestückungs- und/oder Entnahmeposition angeordnet ist und die andere Formaufspannplatte (22) in der Produktionsposition angeordnet ist.

5. Vorrichtung (10) nach einem der vorhergehenden Ansprüche, **dadurch gekennzeichnet, dass** die wenigstens eine Formaufspannplatte (22) relativ zu dem Werkzeugtisch (14) bewegbar ist.

6. Vorrichtung (10) nach einem der vorhergehenden Ansprüche, **dadurch gekennzeichnet, dass** die Schließeinheit (16) als eine 3-Säulenpresse (28), 4-Säulenpresse oder eine Rahmenpresse ausgebildet ist.

7. Vorrichtung (10) nach Anspruch 6, **dadurch gekennzeichnet, dass** sich der Drehtisch (20) um eine Säule (30) der 3-Säulenpresse (28) dreht.

8. Vorrichtung (10) nach Anspruch 6 oder 7, **dadurch gekennzeichnet, dass** die Schließeinheit (16) zwei zueinander beabstandete, feststehende Schließplatten (32, 34) und eine entlang den Säulen (30) bewegbare Schließplatte (36), die zwischen den feststehenden Schließplatten (32, 34) angeordnet ist, aufweist, wobei zwischen einer feststehenden Schließplatte (32; 34) und der bewegbaren Schließplatte (36) ein Krafterzeugungsmittel zum Bewegen der bewegbaren Schließplatte (36) und zum Erzeugen der zum Einspritzen erforderlichen Schließkraft angeordnet ist.

9. Vorrichtung (10) nach Anspruch 8, **dadurch gekennzeichnet, dass** in der Produktionsposition die Formaufspannplatte (22) auf der bewegbaren Schließplatte (36) angeordnet ist.

10. Vorrichtung (10) nach Anspruch 8 oder 9, **dadurch gekennzeichnet, dass** die Einspritzeinheiten (38) auf einer der feststehenden Schließplatten (32; 34) angeordnet sind.

11. Vorrichtung (10) nach einem der vorhergehenden Ansprüche, **dadurch gekennzeichnet, dass** jeder Einspritzeinheit (38) eine Plastifiziereinheit (40) zugeordnet ist.

12. Verfahren zum Verbinden von strangförmigen Profilabschnitten (12) zu einem geschlossenen Profilelement mit einer Vorrichtung (10) nach einem der Ansprüche 1 bis 11, das folgende Schritte aufweist:
a. Bestücken eines Werkzeugtisches mit Formgebungswerkzeugen (24);
b. Einlegen der Endabschnitte zweier strangförmiger Profilabschnitte (12) in jeweils ein Formgebungswerkzeug (24);
c. Aufbringen einer Schließkraft auf die Formgebungswerkzeuge (24) mittels einer Schließeinheit (16);
d. Einspritzen einer plastifizierten Formmasse mittels einer Spritzgießvorrichtung (18) in die Formgebungswerkzeuge (24), um die Endabschnitte der Profilabschnitte (12) stoffschlüssig miteinander zu verbinden; und
e. Entnahme des geschlossenen Profilelementes aus den Formgebungswerkzeugen (24).
